# EUROPEAN PATENT APPLICATION

(11) **EP 4 328 339 A1**
(43) Date of publication of application: **28.02.2024**
(21) Application number: 22791486.8
(22) Date of filing: 25.03.2022
(51) Int. Cl.: C22B 5/10, C22B 7/00, C22B 23/02, H01M 10/54

(54) **METHOD FOR PRODUCING VALUABLE METAL**

(30) Priority: 23.04.2021 JP 2021073229
(71) Applicant: SUMITOMO METAL MINING CO., LTD., Tokyo 105-8716 (JP)
(72) Inventor: YABE, Takayuki, Niihama-shi, Ehime 792-0002 (JP); YAMASHITA, Yu, Niihama-shi, Ehime 792-0002 (JP)
(74) Representative: Jones, Nicholas Andrew
(86) International application number: PCT/JP2022/014648
(87) International publication number: WO 2022/224711

(57) **Abstract**

The present invention provides a method for producing a valuable metal from a starting material that contains waste lithium ion batteries, the method being capable of effectively obtaining a metal which has a reduced phosphorus content. The present invention provides a method for producing a valuable metal from a starting material that contains waste lithium ion batteries containing phosphorus, the method comprising: a melting step in which the starting material is melted, thereby obtaining a melt; and a slag separation step in which slag is separated from the melt and an alloy containing a valuable metal is recovered. According to the present invention, an alloy is recovered, while making it sure that the recovery ratio of cobalt from the starting material is from 95.0% to 99.6%, thereby suppressing the phosphorus content in the alloy to 0.1% by mass or less.

## Description

### TECHNICAL FIELD

The present invention relates to a method for producing a valuable metal from a raw material that includes discarded lithium ion batteries.

### BACKGROUND ART

In recent years, lithium ion batteries have been widely used as light secondary batteries having a high power output. As lithium ion batteries, those which have a negative electrode material having a negative electrode active material such as graphite fixed to a negative current collector of copper foil, a positive electrode material having a positive electrode active material such as lithium nickel oxide or lithium cobalt oxide fixed to a positive current collector of aluminum foil, a separator of, e.g., a porous resin film including polypropylene, an electrolyte solution including an electrolyte such as lithium hexafluorophosphate (LiPF₆) and the like sealed in an outer can made of a metal such as aluminum or iron, have been known.

One of the main uses of lithium ion batteries is for hybrid electric vehicles and electric vehicles, and large quantities of on-board lithium ion batteries are also expected to be discarded along vehicle life cycles in the future. Many suggestions have been made that used batteries as described above and defective batteries caused during production (hereinafter referred to as "discarded lithium ion battery") are reused as a resource. As a method for reusing discarded lithium ion batteries, for example, a pyrometallurgy process has been suggested in which the total amount of waste lithium ion batteries is melted in a high temperature furnace.

Discarded lithium ion batteries include valuable metals such as nickel (Ni), cobalt (Co), copper (Cu), and further impurity components such as carbon (C), aluminum (Al), fluorine (F) phosphorus (P) and the like. Therefore, in order to recover valuable metals from discarded lithium ion batteries, it is required to remove these impurity components.

Among these impurity components, remaining carbon prevents separation of metal and slag. Carbon also contributes as a reducing agent, and thus may prevent proper oxidation removal of other substances. Among the above-described impurity components, particularly phosphorus is relatively easily reduced, and thus in order to increase the recovery rate of a valuable metal such as cobalt, when an adjusted reduction degree is too strong, phosphorus remains in metal because oxidation removal thereof does not occur. On the other hand, when an adjusted reduction degree is too weak, a valuable metal is also oxidized and the recovery rate thereof is reduced.

In order to stably recover a valuable metal and remove phosphorus, therefore, it is required to stably control an amount of carbon. In order to maintain a high recovery rate of a valuable metal and also reduce phosphorus remaining in metal, it is desired that phosphorus be selectively removed.

Patent Document 1, for example, suggests as a method for recovering cobalt from discarded lithium ion batteries by a dry method, a process of putting discarded lithium ion batteries into a melting furnace to oxidize them by oxygen. In this process, cobalt can be recovered at a high recovery rate; however, Patent Document 1 does not describe the removal of phosphorus and does not disclose that the recovery of a valuable metal and removal of phosphorus are stably carried out.

Patent Document 2 also suggests a process having a dephosphorization step, in which separation of metal and slag is promoted by adding SiO₂ and CaO when melting discarded lithium ion batteries to reduce the melting point of slag, and phosphorus is then removed by adding CaO while blowing oxygen into metal after separating slag. Phosphorus can be removed by this process; however, in order to further reduce production costs, an efficient process has been desired, by which the dephosphorization step is not needed. Citation List

### Patent Document

Patent Document 1: Japanese Unexamined Patent Application (Translation of PCT Application), Publication No. 2013-506048
Patent Document 2: Japanese Unexamined Patent Application, Publication No. 2013-091826

### DISCLOSURE OF THE INVENTION

### Problems to be Solved by the Invention

The present invention has been made in view of the above circumstances, and an object thereof is to provide a method for producing a valuable metal from a raw material that includes discarded lithium ion batteries, which method can effectively obtain metal with a reduced phosphorus content.

### Means for Solving the Problems

The present inventors repeated diligent considerations to solve the above-described problems. As a result, the present inventors found that a high quality alloy with a phosphorus content of 0.1 mass% or less could be obtained by, in a step of obtaining a melt by melting a raw material that includes discarded lithium ion batteries, calculating a cobalt recovery rate from the raw material, confirming that the cobalt recovery rate is within a specific range, and then recovering the alloy (metal), thereby completing the present invention.

(1) A first invention of the present invention is a method for producing a valuable metal from a raw material that includes discarded lithium ion batteries containing phosphorus, the method comprising a melting step of melting the raw material to obtain a melt, and a slag separation step of separating slag from the melt and recovering an alloy containing a valuable metal, wherein by confirming that a cobalt recovery rate from the raw material is 95.0% or more and 99.6% or less, and then recovering the alloy, the alloy has a phosphorus content of 0.1 mass% or less.
(2) A second invention of the present invention is the method for producing a valuable metal in the first invention, wherein the cobalt recovery rate is confirmed from analysis results of a cobalt grade in generated slag in the melting step.
(3) A third invention of the present invention is the method for producing a valuable metal in the first or second invention, wherein the cobalt recovery rate is confirmed to be 95.0% or more and 98.0% or less, and the alloy is then recovered.
(4) A fourth invention of the present invention is the method for producing a valuable metal in any one of the first to third inventions, wherein the raw material is melted at a heating temperature of 1300°C or higher and 1500°C or lower in the melting step.

### Effects of the Invention

According to the present invention, metal with a reduced phosphorus content can be effectively obtained in the method for producing a valuable metal from a raw material that includes discarded lithium ion batteries.

Therefore, it is not required to provide a step of a dephosphorization treatment after recovering metal, and more efficient operations can be carried out.

### BRIEF DESCRIPTION OF THE DRAWINGS

FIG. 1 is a graph showing a relationship between cobalt recovery rates and phosphorus grades in metal;
FIG. 2 is a flowchart showing an example of flows in the method for producing a valuable metal; and
FIG. 3 is a graph showing a relationship between cobalt grades in slag and cobalt recovery rates.

### PREFERRED MODE FOR CARRYING OUT THE INVENTION

An embodiment of the present invention (hereinafter referred to as "the present embodiment") will now be described. It should be noted that the present invention is not limited to the following embodiment, and various modifications can be made without departing from the spirit of the present invention.

### <<1. Method for producing valuable metal>>

The method for producing a valuable metal according to the present embodiment is a method for separating and recovering a valuable metal from a raw material that includes discarded lithium ion batteries containing phosphorus. Therefore, the method can be reworded as a method for recovering a valuable metal. The method according to the present embodiment is a method mainly using a pyrometallurgy process, but may also include the pyrometallurgy process and a hydrometallurgy process.

The discarded lithium ion batteries are a concept including not only used lithium ion batteries but also defective batteries caused in production steps of, e.g., a positive electrode material to form batteries, residues in production steps, and waste materials such as scrap in production steps of lithium ion batteries. Therefore, discarded lithium ion batteries can be also referred to as waste materials of lithium ion batteries.

In addition, the valuable metal includes nickel (Ni), cobalt (Co), copper (Cu) and combination thereof, and is at least one metal or alloy selected from the group consisting of nickel (Ni), cobalt (Co), copper (Cu) and combination thereof. It should be noted that each valuable metal content included in discarded lithium ion batteries is not particularly limited. Copper, for example, may be included in an amount of 10 mass% or more.

Specifically, the method for producing a valuable metal according to the present embodiment has at least a melting step of melting a raw material that includes discarded lithium ion batteries containing phosphorus to obtain a melt, and a slag separation step of separating slag from the melt and recovering an alloy containing valuable metals. The method is characterized in that by confirming that a cobalt recovery rate from the raw material is within a specific range, and then recovering the alloy, the alloy has a phosphorus content of 0.1 mass% or less.

The "cobalt recovery rate" means the percentage of the amount of cobalt in recovered metal (alloy) to the amount of cobalt in a raw material that includes discarded lithium ion batteries.

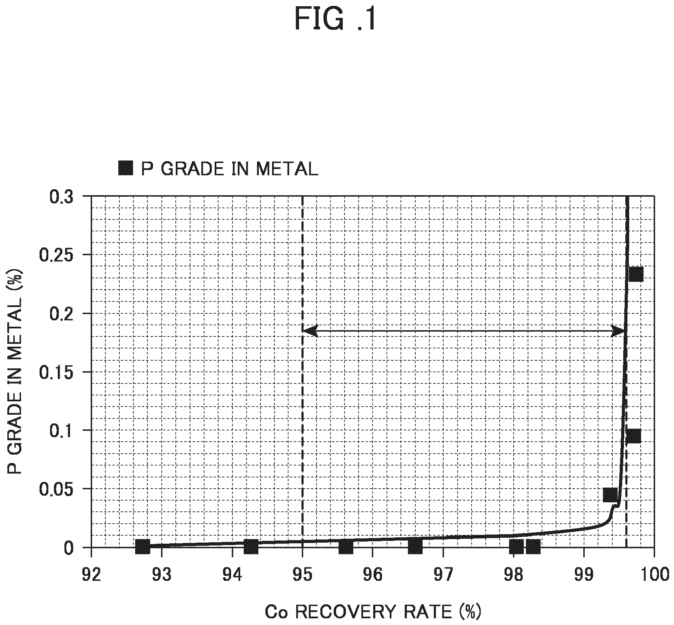

As a result of researches, the present inventors found that there was a relationship between the cobalt recovery rate from a raw material that includes discarded lithium ion batteries and the grade of phosphorus (P) included in a recovered alloy (metal). Specifically, FIG. 1 is a graph showing a relationship between cobalt recovery rates and phosphorus grades in metal. As shown in the graph in FIG. 1, it is found that when the cobalt recovery rate is above 99.6%, the phosphorus grade in metal recovered suddenly increases. It should be noted that the recovery rate of cobalt, a valuable metal, is preferably 95.0% or more.

Because of this, in the method for producing a valuable metal according to the present embodiment, an alloy is recovered after confirming that the cobalt recovery rate from a raw material is within a range of 95.0% or more and 99.6% or less. By doing this, the alloy (metal) has a phosphorus content of 0.1 mass% or less.

According to the method as described above, phosphorus can be effectively and efficiently removed while recovering cobalt at a high recovery rate without separately providing a step of a dephosphorization treatment after recovering an alloy, and an alloy with a reduced phosphorus content can be recovered.

### <<2. Each step in production method>>

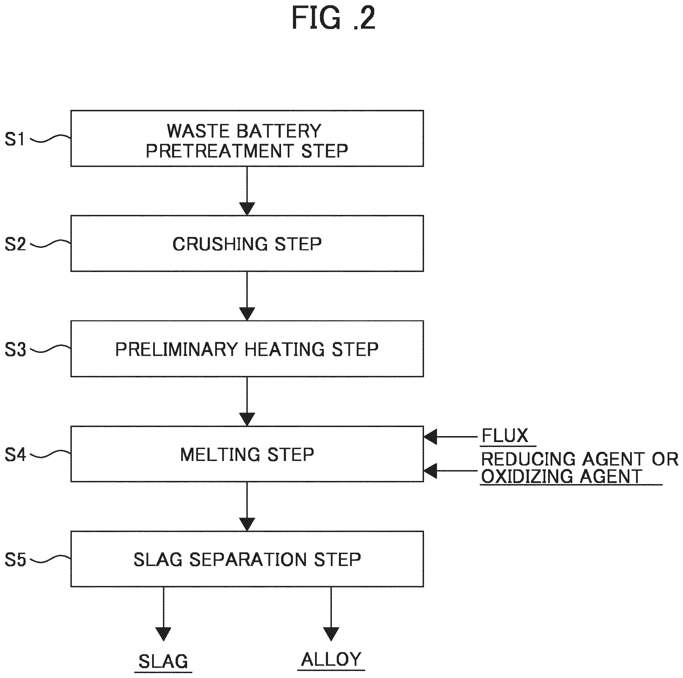

FIG. 2 is a flowchart showing an example of flows in the method for producing a valuable metal according to the present embodiment. As shown in FIG. 2, the method for producing a valuable metal has a waste battery pretreatment step S1 of removing electrolyte solutions and outer cans of discarded lithium ion batteries, a crushing step S2 of crushing the contents of the batteries to obtain crushed material, a preliminary heating step (also referred to as "oxidative roasting step") S3 of preliminarily heating the crushed material as needed, a melting step (also referred to as "reduction melting step") S4 of melting the crushed material to obtain a melt, and a slag separation step S5 of separating slag from the melt to recover an alloy including valuable metals.

### [Waste battery pretreatment step]

When recovering a valuable metal from discarded lithium ion batteries, the waste battery pretreatment step S1 is carried out for the purposes of, e.g., preventing explosions of discarded lithium ion batteries or making them harmless, and removing the outer cans thereof.

That is, discarded lithium ion batteries such as used lithium ion batteries are tightly closed systems, and have, e.g., an electrolyte solution in the inside thereof. Therefore, when the crushing treatment is directly carried out, there is a risk that an explosion will occur, which is dangerous. It is therefore required to carry out a discharge treatment and a removal treatment of electrolyte solutions in any way. As described above, safety can be increased and the recovering productivity of valuable metals such as copper, nickel and cobalt can be increased by removing electrolyte solutions and outer cans in the waste battery pretreatment step S1.

The specific method for the pretreatment is not particularly limited, and, for example, by physically opening a hole in a battery with a needle-shaped edge, an electrolyte solution in the inside thereof can be allowed to flow out and be removed. In addition, electrolyte solutions may be burned by directly heating discarded lithium ion batteries to make them harmless.

It should be noted that the outer cans forming batteries are frequently formed from, e.g., a metal such as aluminum or iron, and the outer cans made of metals can be directly and relatively easily recovered as valuable metals by carrying out the pretreatment as described above. When recovering aluminum and iron included in the outer cans, for example, the removed outer cans can be crushed and then sieved using a sieve shaker. Aluminum easily becomes powder even by mild crushing, and can be efficiently recovered. Iron included in the outer cans can be also recovered by selection using a magnetic force.

### [Crushing step]

In the crushing step S2, battery contents obtained by the waste battery pretreatment step S1 are crushed to obtain crushed material. The treatment in the crushing step S2 is carried out for the purpose of increasing reaction efficiency in the pyrometallurgy process after the next step, and the recovery rates of valuable metals such as copper, nickel and cobalt can be increased by increasing the reaction efficiency.

The crushing method is not particularly limited, and the battery contents can be crushed using a conventionally known crusher such as a cutter mixer.

### [Preliminary heating step]

The crushed material of discarded lithium ion batteries after the crushing step S2 can be subjected to a heating treatment (oxidative roasting treatment) by providing the preliminary heating step S3 as needed. Impurities included in the battery contents can be removed by volatilization or thermal decomposition using the heating treatment in the preliminary heating step S3.

In the preliminary heating step S3, for example, heating is preferably carried out at a temperature (preliminary heating temperature) of 700°C or higher. When the preliminary heating temperature is 700°C or higher, the removal efficiency of impurities included in batteries can be increased. On the other hand, the upper limit of the preliminary heating temperature is preferably 900°C or lower, and thereby thermal energy costs can be reduced, and the treatment efficiency can be increased.

The heating treatment is preferably carried out in the presence of an oxidizing agent. Because of this, among impurities included in the battery contents, carbon can be oxidized and removed, and also aluminum can be oxidized. Particularly, because of the oxidation removal of carbon, molten fine particles of a valuable metal locally generated in the subsequent melting step S4 can cohere without physical obstacles by carbon, and thus alloys obtained as melts can be integrated and easily recovered. It should be noted that in general main elements forming discarded lithium ion batteries are easily oxidized in the order of aluminum > lithium > carbon > manganese > phosphorus > iron > cobalt > nickel > copper due to differences in affinities for oxygen.

The oxidizing agent is not particularly limited, and gases including oxygen such as air, pure oxygen and oxygen enriched gas are preferably used from the viewpoint of easy handling. In addition, the amount of oxidizing agent introduced can be, for example, about 1.2 times the equivalent required to oxidize each substance which is a target of the oxidation treatment.

### [Melting step]

In the melting step (reduction melting step) S4, the crushed material of discarded lithium ion batteries is melted with flux to obtain a melt having an alloy including valuable metals and slag. Because of this, impurity elements such as aluminum are included as oxides in slag, and phosphorus is also incorporated into flux and included in slag. On the other hand, valuable metals such as copper which are difficult to form oxides are melted, and can be recovered as an integrated alloy from the melt. It should be noted that the alloy in a molten state obtained from the melt is also referred to as "molten alloy."

The flux is preferably one including an element which forms a basic oxide having a lower melting point by incorporating impurity elements. Among the flux, a calcium compound is more preferably included from the viewpoint of being inexpensive and stable at normal temperature. Phosphorus, an impurity element, becomes an acidic oxide by oxidation, and thus as slag formed by the melting treatment becomes basic, phosphorus is more easily incorporated into slag.

As the calcium compound, for example, calcium oxide and calcium carbonate can be added. In addition, because an Al₂O₃-CaO-Li₂O system is used as a slag system, the amount of calcium added is preferably a suitable amount to melt alumina in a sample by a eutectic reaction, that is an amount at which CaO/(Al₂O₃ + CaO) = 0.15 or more in the weight ratio is obtained.

The melting step S4 may be carried out in the presence of an oxidizing agent or a reducing agent to properly adjust the oxidation-reduction degree when melting discarded lithium ion batteries.

As the oxidizing agent, those which have been known can be used, and a solid oxidizing agent may be added, or a gas oxidizing agent may be introduced into a furnace. In addition, as the reducing agent, those which have been known can be also used; however, a reducing agent including carbon atom is preferred. Oxides of, e.g., copper, nickel and cobalt, valuable metals to be recovered, included in discarded lithium ion batteries can be easily reduced by adding the reducing agent including carbon atom to the discarded lithium ion batteries.

Specific examples of the reducing agent including carbon atom include graphite which can reduce 2 mol of valuable metal oxides such as copper oxide and nickel oxide with 1 mol of carbon. Hydrocarbons which can reduce 2 mol to 4 mol of valuable metal oxides per mol thereof, carbon monoxide which can reduce 1 mol of valuable metal oxides per mol thereof, and the like can be also added as supply sources of carbon. Therefore, valuable metals are efficiently reduced by the reduction melting treatment in the presence of carbon as the reducing agent, and an alloy including valuable metals can be more effectively obtained. There is also an advantage that the reduction treatment using carbon has extremely high safety compared to when using thermite reaction in which reduction is caused using metal powder of, e.g., aluminum as the reducing agent.

It should be noted that when adding carbon as the reducing agent, an excessive amount of carbon may be added. In a case where the amount of carbon added is too high, when a phosphorus compound is included in discarded lithium ion batteries, there is a possibility that phosphorus will be also reduced by the carbon and included in the molten alloy phase; however, by melting the discarded lithium ion batteries in the presence of flux while adding an oxidizing agent as needed, phosphorus can be incorporated into the flux and removed.

At the time of heating in the melting treatment, the fluidity of the melt is low and some of the crushed material remains without being melted when reaching the heating temperature, and it is thus required to retain the heating temperature over, e.g., 30 minutes or more. It should be noted that it is preferred to finally observe the inside of a crucible and confirm that a complete melt is obtained using an iron measuring rod. After melting, an alloy (molten alloy) and slag in molten states with higher fluidity are separated into the lower layer and the upper layer, respectively, due to the specific gravity thereof in a crucible. Also at this time, the cooling and crushing treatments are carried out after collecting slag in the supernatant using an iron measuring rod.

The method for producing a valuable metal according to the present embodiment is characterized in that by confirming that the cobalt recovery rate from a raw material is 95.0% or more and 99.6% or less and then recovering an alloy (metal), the alloy has a phosphorus content of 0.1 mass% or less.

The method for calculating the cobalt recovery rate is not particularly limited, and, for example, it can be calculated based on a cobalt grade in slag generated by the melting treatment in the melting step S4. Specifically, slag generated in the melting treatment is used, and the cobalt grade in the slag is quickly (e.g., within 8 minutes) analyzed by an analyzer such as a fluorescent X-ray analyzer.

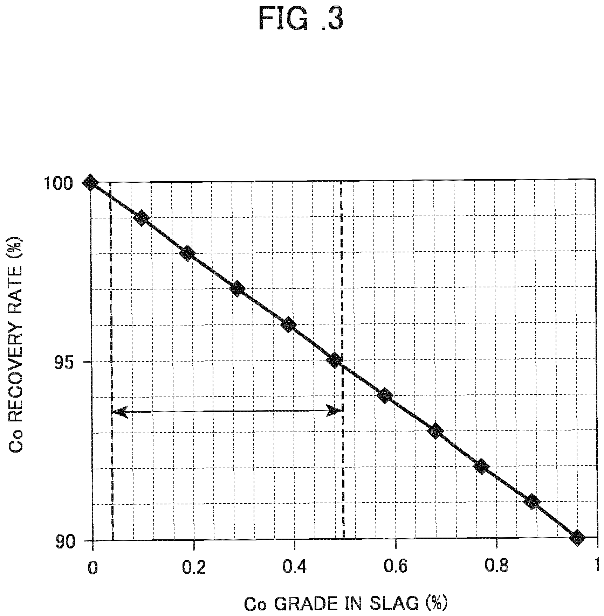

FIG. 3 is a graph showing a relationship between cobalt grades in slag and cobalt recovery rates. As shown in the graph in FIG. 3, the cobalt grade in slag is in proportion to the cobalt recovery rate. Because the amount of flux, e.g., calcium, added to the composition of discarded lithium ion batteries, a raw material, is determined as a suitable amount for melting, when the composition of the discarded lithium ion batteries, a raw material, is determined, the amount of slag generated is determined, and the slope and intercept of the proportional relationship are also determined. Therefore, based on such proportional relationship, the cobalt recovery rate can be effectively calculated from the analysis results of the cobalt grade in slag.

Alternatively, the amount of cobalt in metal is obtained from the amount of cobalt in slag, which is obtained from the amount of cobalt in added discarded lithium ion batteries, a raw material, the cobalt grade in slag generated in the melting treatment, and the amount of slag generated, and the cobalt recovery rate can be calculated from the above value. It should be noted that the total amount of nickel, cobalt and copper is considered to be distributed into metal, and they are subtracted from the amount of added discarded lithium ion batteries, and the amount of slag is obtained on the assumption that remaining elements form oxides, and added flux is added as calcium oxide to the amount of slag.

In the melting step S4, as described above, the cobalt recovery rate is confirmed from the analysis results of generated slag. Specifically, as shown in the graph in FIG. 1, it is confirmed whether or not the cobalt recovery rate is 95.0% or more and 99.6% or less. By confirming that the cobalt recovery rate is 95.0% or more and 99.6% or less, then finishing the melting treatment, and recovering an alloy in the subsequent slag separation step S5, the recovered alloy can have a phosphorus content of 0.1 mass% or less.

The cobalt recovery rate is preferably 95.0% or more and 98.0% or less. A higher quality alloy having a phosphorus content of 0.01 mass% or less can be recovered by confirming that the cobalt recovery rate in an alloy is within such range, then finishing the melting treatment, and recovering the alloy.

In the operation by the cobalt recovery rate based on the analysis results of slag, for example, when the cobalt recovery rate calculated by the analysis results of the cobalt grade in slag is out of a range of 95.0% or more and 99.6% or less, or is within a range of 95.0% or more and 99.6% or less but has a gap from a predetermined target range, some of cobalt in metal is distributed into slag by adding an oxidizing agent as needed when the cobalt grade in slag is low; however, phosphorus in metal can be distributed into slag.

Contrarily, some of phosphorus in slag is distributed into metal by adding a reducing agent when the cobalt grade in slag is high; however, cobalt in slag can be distributed into metal to increase the recovery rate thereof.

As described above, a judgment can be made whether or not the reduction degree is suitable from the calculation results of the cobalt recovery rate by the analysis results of slag, and the melting treatment can be controlled by adding an oxidizing agent or a reducing agent as needed.

As the oxidizing agent used at this time, gases including oxygen such as air, pure oxygen and oxygen enriched gas are preferably used as described above. The amount thereof added (charged) is preferably an amount at which the reaction efficiency of phosphorus in metal: 2P + 5/2O₂ -> P₂O₅ (retention time 20 minutes or more and 30 minutes or less) is 50% or more and 90% or less because there is also an oxidation reaction of cobalt in metal. In addition, as the reducing agent, a reducing agent including carbon atom is preferably used as described above. The amount thereof added (charged) is preferably an amount at which the reaction efficiency of 2CoO + C -> 2Co + CO₂ is 30% or more and 70% or less because there is also a reduction reaction of phosphorus in slag.

The heating temperature (melting temperature) in the melting treatment is not particularly limited, and is preferably 1300°C or higher, and more preferably 1350°C or higher. Valuable metals such as copper, cobalt and nickel are efficiently melted by the melting treatment at a temperature of 1300°C or higher, and a molten alloy is formed in a state in which fluidity is fully increased. Therefore, the separation efficiency of valuable metals and impurity components in the slag separation step S5 described later can be improved. It should be noted that when the heating temperature is lower than 1300°C, the separation efficiency of valuable metals and impurities can be insufficient.

The upper limit of the heating temperature in the melting treatment is preferably 1500°C or lower. When the heating temperature is higher than 1500°C, thermal energy is wastefully used, the consumption of refractories such as a crucible and furnace walls becomes severe, and productivity can be reduced.

In the melting treatment, dust, exhaust gas, etc. can be generated; however, they can be made harmless by a conventionally known exhaust gas treatment.

### [Slag separation step]

In the slag separation step S5, the melt obtained in the melting step S4 is solidified, and slag is then separated from the solidified melt to recover an alloy including valuable metals. The slag and alloy included in the solidified melt are separated due to differences in the specific gravity thereof, and thus the slag and the alloy can be each recovered.

In the method according to the present embodiment, as described above, in the melting step S4, for example, the cobalt recovery rate is calculated from the cobalt grade in slag, the cobalt recovery rate is confirmed to be 95.0% or more and 99.6% or less, and the melting treatment is then finished. After this, an alloy (metal) is recovered by separation from slag in the slag separation step S5. By doing this, an alloy in which the proportion of phosphorus contained is effectively reduced, specifically the phosphorus content is 0.1 mass% or less can be recovered.

The treatment in the smelting process when producing each valuable metal from the alloy including valuable metals can be carried out by a known method such as a neutralization treatment or a solvent extraction treatment, and is not particularly limited. As an example, in the case of an alloy including cobalt, nickel and copper, the valuable metals are leached out by an acid such as sulfuric acid (leaching step), then copper, for example, is extracted by, e.g., solvent extraction (extraction step), and the solution of remaining nickel and cobalt can be provided and used in, e.g., a production step of a positive active material in a battery production process.

According to the method according to the present embodiment, an alloy including valuable metals in which phosphorus is effectively removed can be obtained, and thus a smelting process when producing each valuable metal from the alloy including the valuable metals can be simplified. That is, it is not required to provide a step of dephosphorizing the obtained alloy including the valuable metals. Therefore, a valuable metal can be efficiently obtained at a higher recovery rate using the process from the waste battery pretreatment step S1 to the slag separation step S5 as the pretreatment in its broad sense by a smelting process of producing each valuable metal from the obtained alloy including the valuable metals.

### EXAMPLES

The present invention will now be described in more detail by way of Examples thereof. It should be noted, however, that the present invention is not limited to the following Examples in any way.

### [Recovery treatment of valuable metal]

### (Waste battery pretreatment step)

First, 18650 cylindrical batteries, used on-board square batteries, and defective batteries recovered in battery production steps were prepared as discarded lithium ion batteries. These discarded lithium ion batteries were discharged by immersing them together in salt water, moisture was then removed, and electrolyte solutions and outer cans were decomposed and removed by roasting the batteries in the atmosphere at a temperature of 260°C to obtain battery contents. The main element composition of the battery contents was as shown in Table 1 below.

**[Table 1]**

| Main element composition of battery contents (mass%) | | | | | |
|---|---|---|---|---|---|
| Copper | Nickel | Cobalt | Phosphorus | Aluminum | Carbon |
| 31 | 5 | 5 | 0.5 | 15 | 25 |

### (Crushing step)

Next, the battery contents were crushed with a crusher (Good Cutter manufactured by UJIIE MANUFACTURING CO., LTD.) to obtain crushed material.

### (Preliminary heating step)

Next, the obtained crushed material was put into a rotary kiln, and preliminarily heated in the atmosphere at a preliminary heating temperature of 800°C for 180 minutes.

### (Melting step)

In Examples 1 to 3, using each 500 g of crushed material after the heating treatment obtained by the preliminary heating step, a melting treatment test was carried out at heating temperatures (reduction temperatures) set to 1350°C, 1400°C and 1450°C in the following conditions.

In the melting treatment, 127 g, which is from CaO/(CaO + Al₂O₃) = 0.4 in the weight ratio, of calcium oxide was added as flux to the crushed material. An amount obtained by oxidizing the whole amount of the sum total of the crushed material except for nickel, cobalt and copper was considered as the amount of slag, and 20 g, which is 5% of the amount of manganese included in slag, of silicon dioxide was added to the amount of slag. For the adjustment of the oxidation-reduction degree, 10 g of graphite powder as a reducing agent was added, and the obtained mixture was mixed and charged into an alumina crucible.

In the melting treatment, heating was carried out to each heating temperature in a resistance heating furnace, and it was confirmed that the molten state was obtained by a measuring rod, and the molten state was then retained for 40 minutes. After that, slag was sampled every 10 minutes, and the cobalt grade in the slag was analyzed using a fluorescent X-ray analyzer. In the sampling method, an iron measuring rod was inserted to collect the slag, and the collected slag was crushed by a small vibrating mill and then analyzed by the fluorescent X-ray analyzer to measure the cobalt grade in the slag.

From the relationship between the cobalt grade in the slag and the cobalt recovery rate (FIG. 3), the cobalt recovery rate distributed into metal is calculated based on the cobalt grade, and it was confirmed that the cobalt recovery rate was 95.0% or more, and the melting treatment was then finished. After that, the crucible was taken out, and metal was allowed to flow out, cooled and recovered (slag separation step).

It should be noted that in Examples 1 to 3, when the cobalt recovery rate was less than 95.0% based on the results of sampling, a reducing agent was added to adjust the reduction degree, and the melting treatment was continued. The added amounts of the reducing agent were each 0.30 g (after the first sampling in Example 1), 0.24 g (after the second sampling in Example 1), 0.41 g (after the first sampling in Example 2), and 0.52 g (after the first sampling in Example 3).

In Comparative Example 1, the melting temperature was 1400°C, the retention time was 25 minutes, and slag was not sampled. In Comparative Example 2, the retention time was 80 minutes, and slag was not sampled.

### (Slag separation step)

A melt after the melting treatment was casted in a mold using differences in specific gravity, and slag was then separated from the solidified melt having separated metal and slag to recover an alloy.

The elemental analysis of the slag after recovering the alloy was carried out using an ICP analyzer (Agilent 5100 SUDV manufactured by Agilent Technologies) to obtain the amounts of cobalt and phosphorus as the proportions to the total mass of slag (mass%).

The elemental analysis of the alloy after separating slag was also carried out using an ICP analyzer (Agilent 5100 SUDV manufactured by Agilent Technologies) to measure the amounts of cobalt and phosphorus, and the cobalt recovery rate from the battery contents and the phosphorus grade in the alloy were obtained.

### [Results]

Table 2 below shows measurement results of the cobalt recovery rate from battery contents relative to the total mass of slag and the phosphorus grade in an alloy.

**[Table 2]**

| Sample | Melting temperature (°C) | Sampling | Cobalt recovery rate(%) | Phosphorus grade in alloy(mass%) |
|---|---|---|---|---|
| Example 1 | 1350 | First | 90.5 | - |
| | | Second | 93.1 | - |
| | | Third | 95.2 | <0.01 |
| Example 2 | 1400 | First | 93.1 | - |
| | | Second | 96.7 | <0.01 |
| Example 3 | 1450 | First | 94.5 | - |
| | | Second | 99.1 | 0.02 |
| Comparative Example 1 | 1400 | - | 88.6 | <0.01 |
| Comparative Example 2 | 1400 | - | 99.8 | 0.57 |

As can be seen from the results in Table 2, favorable results were obtained in the alloys obtained in Examples 1 to 3, in which the recovery rate of cobalt, a valuable metal, included in batteries was 95% or more, and the phosphorus grade in the obtained alloys was 0.02 mass% or less. As described above, it was found that metal with a reduced phosphorus grade could be obtained by, in the course of the melting treatment, calculating the cobalt recovery rate, carrying out the melting treatment while adjusting the reduction degree based on the above results, confirming that the cobalt recovery rate was 95% or more, and then recovering the alloy.

On the other hand, in both Comparative Examples 1 and 2, worse results than those in Examples 1 to 3 were obtained, in which the cobalt recovery rate in the obtained metal was lower, or the phosphorus grade was higher.

## Claims

1. A method for producing a valuable metal from a raw material that comprises discarded lithium ion batteries containing phosphorus, the method comprising,
a melting step of melting the raw material to obtain a melt, and
a slag separation step of separating slag from the melt and recovering an alloy comprising a valuable metal,
wherein a phosphorus content of the alloy is made 0.1 mass% or less by confirming that a cobalt recovery rate from the raw material is 95.0% or more and 99.6% or less, and then recovering the alloy.

2. The method for producing a valuable metal according to claim 1,
wherein the cobalt recovery rate is confirmed from analysis results of a cobalt grade in generated slag in the melting step.

3. The method for producing a valuable metal according to claim 1 or 2,
wherein the cobalt recovery rate is confirmed to be 95.0% or more and 98.0% or less, and the alloy is then recovered.

4. The method for producing a valuable metal according to any one of claims 1 to 3,
wherein the raw material is melted at a heating temperature of 1300°C or higher and 1500°C or lower in the melting step.
